# EUROPÄISCHE PATENTSCHRIFT

(11) **EP 0 371 204 B1**
(45) Veröffentlichungstag und Bekanntmachung des Hinweises auf die Patenterteilung: **26.10.1994**
(21) Anmeldenummer: 89114700.1
(22) Anmeldetag: 09.08.1989
(51) Int. Cl.: G02B 6/44

(54) **Verfahren zum Herstellen eines Lichtwellenleiterbandes**
Method of manufacturing a light wave guide ribbon
Procédé de fabrication d'un ruban de guides d'ondes lumineuses

(30) Priorität: 29.11.1988 DE 3840142
(43) Veröffentlichungstag der Anmeldung: 06.06.1990
(73) Patentinhaber: KABEL RHEYDT Aktiengesellschaft, D-41179 Mönchengladbach (DE)
(72) Erfinder: Zamzow, Peter, D-4630 Bochum (DE); Hög, Georg, D-4050 Mönchengladbach 2 (DE); Delâge, Peter, D-4053 Jüchen 5 (DE)
(74) Vertreter: Mende, Eberhard, Dipl.-Ing.

(56) Entgegenhaltungen:
- GB-A- 2 186 389
- GB-A- 2 187 865
- US-A- 4 147 407
- US-A- 4 720 165
- THE TRANSACTIONS OF THE IECE OF JAPAN, Vol. E-61, Nr. 3, 3 März 1978, Tokyo, JP , Seiten 175-177 ; H. SUZUKI et al. : "Flat Type Cable with Silicone Clad Optical Fibers".

## Beschreibung

Die vorliegende Erfindung betrifft ein Verfahren zum Herstellen eines Lichtwellenleiterbandes aus in einer Ebene parallel nebeneinanderliegend zusammengeführten und anschließend durch ein Haftmittel in dieser Zuordnung zueinander festgelegten Lichtwellenleitern.

Bei einem gattungsgemäßen Verfahren (US-A-47 20 165) durchlaufen zur Herstellung eines solchen Lichtwellenleiterbandes die in einer Ebene ausgerichteten Lichtwellenleiter ein Werkzeug, werden hier durch eine entsprechende Führung miteinander in Kontakt gebracht und die Gesamtanordnung der nebeneinander liegenden Lichtwellenleiter wird mit einem Kleber beschichtet. Nach dem anschließenden Durchlaufen einer Aushärteeinrichtung kann das so hergestellte Lichtwellenleiterband auf Spulen aufgewickelt werden.

Ein Lichtwellenleiterband ist ein Grundelement eines Kabels. In einem Lichtwellenleiterband sind beispielsweise 2 bis 10 Lichtwellenleiter angeordnet. Der Erfindung liegt die Aufgabe zugrunde, ein Verfahren zum Herstellen eines Lichtwellenleiterbandes anzugeben, welches eine hohe Packungsdichte in dem aus Lichtwellenleiterverbindern aufgebauten Kabel ergibt. Diese Aufgabe wird durch ein Verfahren mit dem Kennzeichen des Anspruches 1 gelöst.

Die Erfindung wird im folgenden an einem Ausführungsbeispiel erläutert.

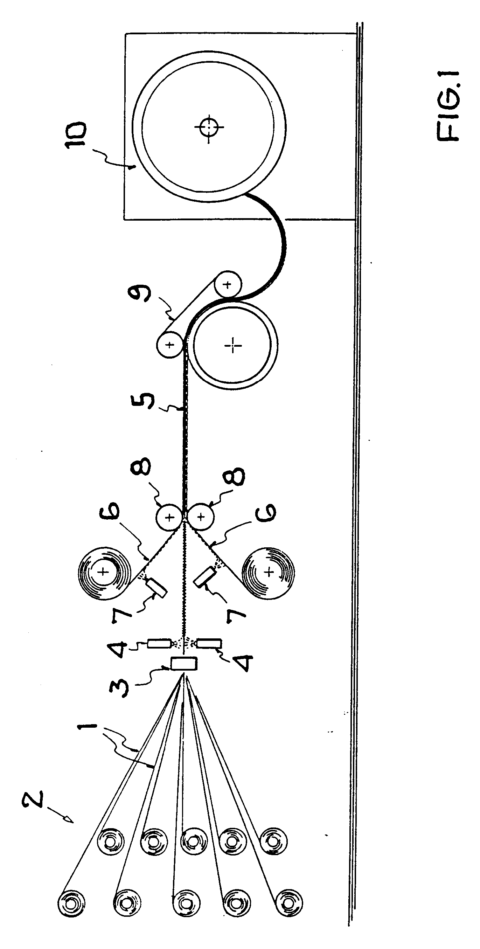

Die Figur 1 zeigt eine Vorrichtung zum Herstellen eines Lichtwellenleiterbandes nach der Erfindung. Im Ausführungsbeispiel der Figur 1 sind 10 Lichtwellenleiter 1 vorgesehen, die zu einem Lichtwellenleiterband verarbeitet werden. Diese 10 Lichtwellenleiter (Fasern) 1 werden von einer Faserablaufvorrichtung 2 einer Vorrichtung 3 zugeführt, die die 10 Lichtwellenleiter 1 in eine Ebene bringt und parallel zueinander anordnet. Die Vorrichtung 3 ist beispielsweise eine Schlitzdüse, die entsprechend der Anzahl der zu verarbeitenden 10 Lichtwellenleiter einen dimensionierten Schlitz aufweist. Entsprechend der Anordnung der Schlitzdüse 3 werden die Lichtwellenleiter 1 nach Verlassen der Schlitzdüse in einer Parallelanordnung und in einer Ebene liegend einer Sprühvorrichtung 4 zugeführt. In der Sprühvorrichtung 4 wird ein Haftmittel auf die Lichtwellenleiter 1 aufgesprüht. Das Haftmittel besteht beispielsweise aus einem Schmelzkleber, der die Eigenschaft hat, daß er nach dem Aufsprühen auf die Lichtwellenleiter sofort abkühlt und sich verfestigt, so daß er die Lichtwellenleiter bindet. Vor dem Aufsprühen wird der Schmelzkleber geschmolzen, damit er sich im aufsprühbaren Zustand befindet. Der aufgeschmolzene Schmelzkleber wird durch Druck mittels temperierter Druckluft auf die Lichtwellenleiter aufgesprüht. Die aufgesprühte Sprühmenge ist so gering, daß die thermische Energie des Schmelzklebers schnell abgeführt wird. Dadurch ist gewährleistet, daß der Schmelzkleber sehr schnell erstarrt.

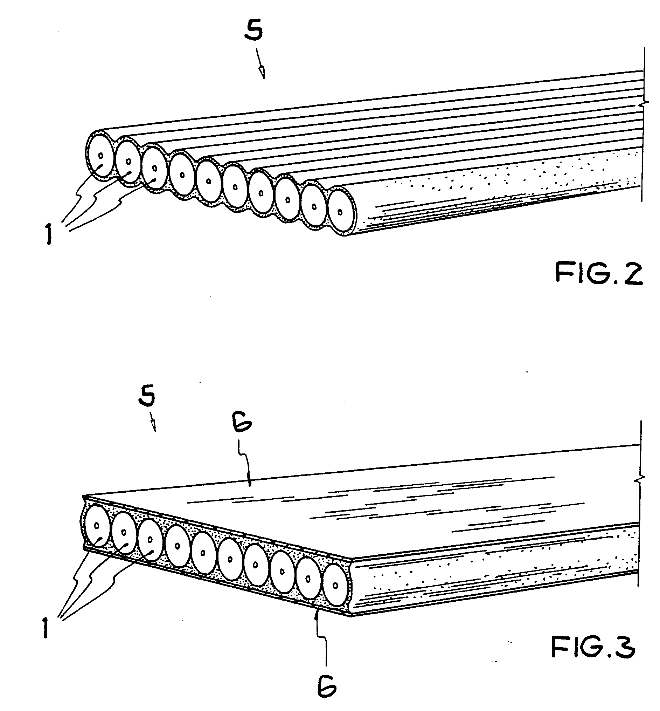

Die Figur 2 zeigt ein Teilstück eines Lichtwellenleiterbandes 5 nach der Fixierung durch das Haftmittel.

Wenn der Schmelzkleber nach dem Aufsprühen auf die Lichtwellenleiter im verfestigten Zustand keine genügende Festigkeit aufweist, wird die erforderliche Stabilität des Lichtwellenleiterbandes gemäß der Figur 1 durch beidseitiges Auftragen einer z. B. aus Polyester bestehenden Folie 6 hergestellt. Dies geschieht gemäß der Figur 1 dadurch, daß die Trägerfolien 6 mittels der Vorrichtung 7 zunächst durch einen Schmelzkleber benetzt und anschließend auf das Lichtwellenleiterband 5 mittels der Walzen 8 aufgewalzt werden. Zur Vermeidung einer Streckung der Folien wird der Kleber erst unmittelbar vor dem Aufwalzen der Folien auf die Lichtwellenleiter auf die Folien aufgetragen. Die Figur 1 zeigt noch eine Abzugvorrichtung 9 sowie eine Aufwickelvorrichtung 10.

Die Figur 3 zeigt ein Teilstück eines Lichtwellenleiterbandes, welches auf beiden Seiten zur Erhöhung der mechanischen Stabilität Trägerfolien 6 aufweist.

## Patentansprüche

1. Verfahren zur Herstellung eines Lichtwellenleiterbandes mit den folgenden Verfahrensschritten:
- daß die Lichtwellenleiter (1) in einer Ebene und parallel zueinanderliegend angeordnet werden,
- daß auf die so angeordneten Lichtwellenleiter (1) zur Fixierung der Lichtwellenleiter (1) in dieser Anordnung ein Haftmittel aufgesprüht wird und
- daß auf die so in ihrer Lage fixierten Lichtwellenleiter (1) ein- oder beidseitig Trägerfolien (6) aufgebracht werden.

2. Verfahren nach Anspruch 1, wobei als Haftmittel ein Schmelzkleber mit kurzer Aushärtungszeit verwendet wird.

3. Verfahren nach Anspruch 1 oder 2, wobei die Lichtwellenleiter (1) durch Schlitzdüsen (3) in eine Ebene sowie in eine Parallellage zueinander gebracht werden.

4. Verfahren nach Anspruch 1 oder einem der folgenden, wobei die Trägerfolien (6) vor dem Aufbringen auf die fixierten Lichtwellenleiter (1) mit einem Kleber benetzt werden.

5. Verfahren nach Anspruch 4, wobei die benetzten Trägerfolien auf die Lichtwellenleiter (1) aufgewalzt werden.

## Claims

1. Method for producing a fibre-optic ribbon by means of the following method steps;
- the optical fibres (1) are arranged in one plane and lying parallel to one another,
- an adhesive is sprayed onto the optical fibres (1) thus arranged in order to fix the optical fibres (1) in this arrangement, and
- carrier films (6) are applied to one or both sides of the optical fibres (1) thus fixed in position.

2. Method according to Claim 1, wherein a hot-melt adhesive with short hardening time is used as adhesive.

3. Method according to Claim 1 or 2, wherein the optical fibres 1 are brought into one plane, as well as into mutually parallel positions, by means of a slot nozzle.

4. Method according to Claim 1 or one of the following claims, wherein the carrier film (6) is wetted with an adhesive before being applied to the fixed optical fibres (1).

5. Method according to Claim 4, wherein the wetted carrier films are rolled onto the optical fibres (1).

## Revendications

1. Procédé de fabrication d'un ruban de guides d'ondes lumineuses comportant les pas de procédé suivants:
- on dispose les guides d'ondes lumineuses (1) dans un plan et parallèlement l'un à l'autre,
- dans cette disposition, on projette par pulvérisation sur les guides d'ondes lumineuses (1), ainsi disposés, un adhésif pour fixer les guides d'ondes lumineuses (1) et
- sur les guides d'ondes lumineuses (1) ainsi fixés dans leur position, on applique des feuilles supports (6) d'un côté ou des deux côtés.

2. Procédé selon la revendication 1 dans lequel on emploie comme adhésif une colle à fusion à bref temps de durcissement.

3. Procédé selon la revendication 1 ou 2, dans lequel, au moyen de buses à fente (3), on amène les guides d'ondes lumineuses (1) dans un plan et dans une position parallèle l'un à l'autre.

4. Procédé selon la revendication 1 ou l'une des suivantes, dans lequel on humecte d'une colle les feuilles supports (6) avant de les appliquer sur les guides d'ondes lumineuses (1), fixés.

5. Procédé selon la revendication 4, dans lequel on applique les feuilles supports, humectées, sur les guides d'ondes lumineuses (1) par lamification.
